# EUROPÄISCHE PATENTSCHRIFT

(11) **EP 2 329 973 B1**
(45) Veröffentlichungstag und Bekanntmachung des Hinweises auf die Patenterteilung: **16.01.2013**
(21) Anmeldenummer: 10192629.3
(22) Anmeldetag: 25.11.2010
(51) Int. Cl.: B60H 1/00

(54) **Kraftfahrzeugklimaanlage**
Motor vehicle air conditioning
Climatisation de véhicule automobile

(30) Priorität: 26.11.2009 DE 102009055714
(43) Veröffentlichungstag der Anmeldung: 08.06.2011
(73) Patentinhaber: Behr GmbH & Co. KG, 70469 Stuttgart (DE)
(72) Erfinder: Lindauer, Sascha, 73553, Alfdorf (DE); Roß, Reinhold, 71701, Schwieberdingen (DE)
(74) Vertreter: Grauel, Andreas

(56) Entgegenhaltungen:
- EP-A2- 1 978 287
- US-A- 4 665 799
- US-B1- 6 431 266

## Beschreibung

Die Erfindung betrifft eine Kraftfahrzeugktimaanlage gemäß dem Oberbegriff des Anspruches 1, wie sie in der EP 1 978 287 A2 offenbart wird.

Kraftfahrzeugklmaanlagen dienen dazu, die dem Innenraum eines Kraftfahrzeuges zuzuführende Luft zu erwärmen und/oder zu kühlen. Die Kraftfahfzeugklimaanlagen sind mit verschiedenen Stellorganen- versehen. Die Stellorgane sind dabei insbesondere als Luftklappen ausgebildete Luftleiteinrichtungen. Die Luftklappen dienen dabei z. B. zu steuern, ob dem Fahrzeuginnenraum Luft aus der Umgebung oder aus dem Fahrzeuginnenraum zugeführt wird. Diese Luftklappen werden als Umluftklappen bezeichnet. Ferner weist die Kraftfahrzeugklimaanlage außerdem zusätzliche Luftklappen auf welche dazu dienen, die in den Fahrzeuginnenraum leitbare Menge an Luft zu steuern. Zum Bewegen der Luftklappen werden als Aktuatoren beispielweise Stellantriebe mit einem Getriebe und einem Elektromotor verwendet.

Die Aktuatoren sind mittels Kinematikelementen mechanisch mit den Stellorganen verbunden oder gekoppelt, so dass mittels des Aktuators die Stellorgane bewegt werden können. Als Kinematikelemente werden auch Wellen mit wenigstens einem Übertragungsring verwendet. Die Übertragungsringe sind dabei senkrecht zu einer Rotationsachse der Welle ausgerichtet. Die Übertragungsringe können dabei auch nur teilweise als Ringsegmente an der Welle ausgebildet sein. Beim Bewegen der Welle bewegt sich der Übertragungsring bzw. das Ringsegment mit, so dass ein entsprechender Bauraum im Bereich der Welle frei zu halten ist. In nachteiliger Weise ist deshalb entsprechender Bauraum an den Wellen als Kinematikelemente erforderlich. Die an den Wellen angeordneten Übertragungsringe stehen dabei in mechanischer Wirkverbindung mit anderen Kinematikelementen oder nur einem anderen Kinematikelement, um von einem auf ein anderes Kinematikelement Kräfte übertragen zu können.

Die Aufgabe der vorliegenden Erfindung besteht deshalb darin, eine Kraftfahrzeugklimaanlage zur Verfügung zu stellen, bei dem Wellen mit Übertragungsringen als Kinematikelemente auch bei eingeschränkten Bauraumverhältnissen eingesetzt werden können. Die Kräftfahrzeugklimaanlage soll in der Herstellung preiswert sein und eine einfache und zuverlässige Montage bzw. Herstellung ermöglichen.

Diese Aufgabe wird gelöst mit einer Kraftfahrzeugklimaanlage, umfassend ein Gehäuse, wenigstens ein Stellorgan, z. B. eine Luftleiteinrichtung oder ein Ventil, einen Aktuator, wenigstens zwei um je eine Rotationsachse (13) rotierbare Wellen (14), die ein Kinematikelement (16) mit einem wenigstens teilweise ausgebildeten Übertragungsring (15) zur Übertragung von Drehmomenten an einer Flanke (18) des Übertragungsringes (15) auf ein zweites Kinematikelement (17) und die Flanke (18) ein axiales Ende (19) aufweisen, wobei das wenigstens eine Stellorgan mittels der Kinematikelemente in mechanischer Wirkverbindung steht mit dem Aktuator zum Bewegen des wenigstens einen Stellorganes, wobei eine an dem axiale Ende der Flanke aufliegende fiktive Ebene in einem Winkel zwischen 85° und 60° zu der Rotationsachse ausgerichtet ist. Der Übertragungsring an der Welle ist somit in einem spitzen Winkel zu der Rotationsachse der Welle ausgerichtet. Damit kann die Welle mit dem Übertragungsring als Kinematikelement auch bei beengten Raumverhältnissen an der Welle eingesetzt werden, weil senkrecht zu der Rotationsachse an dem Übertragungsring teilweise kein Bauraum benötigt wird. Der Übertragungsring an der Welle ist somit bezüglich der Rotationsachse der Welle geneigt.

Das axiale Ende der Flanke des Übertragungsringes entspricht dem Ende der Flanke in Richtung der Rotationsachse der Welle. Die Flanke weist damit zwei axiale Enden auf und auf diese axialen Enden wird fiktiv eine Ebene aufgelegt. Diese fiktive Ebene ist dann in einem Winkel zwischen 85° und 60° zu der Rotationsachse ausgerichtet. Die fiktive Ebene entspricht somit einer Scheibe oder einer Platte, welche an das axiale Ende der Flanke aufgelegt ist.

In einer weiteren Ausgestaltung ist die fiktive Ebene in einem Winkel zwischen 85° und 70° zu der Rotationsachse ausgerichtet.

In einer ergänzenden Ausführungsform ist der Übertragungsring als ein Ringsegment ausgebildet. Bei der Ausbildung des Übertragungsringes als Ringsegment ist der Übertragungsring nur teilweise als ein Ringsegment ausgebildet. Auch ein Ringsegment wird dabei als ein Übertragungsring betrachtet.

Vorzugsweise weist das Ringsegment einen Segmentwinkel zwischen 30° und 180°, insbesondere zwischen 30°-und 100°, auf.

In einer Variante steht der Übertragungsring form- und/oder kraftschlüssig in mechanischer Wirkverbindung mit dem anderen Kinematikelement, Bei einer kraftschlÜssigen mechanischen Wirkverbindung wird das Drehmoment von dem Kinematikelement auf das andere Kinematikelement aufgrund von Kraftschluss Übertragen. Dies bedeutet, dass die Flanke des Übertragungsringes unter einer Druckkraft auf das andere Kinematikelement aufliegt. Bei einer formschlüssigen mechanischen Wirkverbindung wird die Kraft beispielsweise durch das Ineinandergrifen von Zähnen an der Flanke des Übertragungsringes und entsprechend angeordneten Zähne an dem anderen Kinematikelement übertragen.

In einer weiteren Ausgestaltung ist das andere Kinematikelement ein Stellorgan oder das andere Kinematikelement ist einteilig mit dem Stellorgan ausgebildet.

Zweckmäßig ist die Flanke des Übertragungsringes mit Zähnen versehen.

In einer weiteren Ausführungsform ist das andere Kinematikelement mit Zähnen versehen und greift in die Zähne des Übertagungsringes ein,

Insbesondere ist das andere Kinematikelement als eine um eine Rotationsachse rotierbare Welle mit einem wenigstens teilweise ausgebildeten Koppelübertragungsring ausgebildet

In einer weiteren Ausgestaltung ist der Koppelübertragungsring identisch zu dem Übertragungsring ausgebildet. Das andere Kinematikelement kann dabei analog zu der welle mit dem Übertragungsring ausgebildet sein, d. h. identisch. Damit weist auch das andere Kinematikelement einen Koppelübertragungsring auf, der den Übertragungsring der welle entspricht und der Koppelübertragungsring ist dabei dahingehend ausgebildet, dass an ein an dem axialen Ende der Flanke des Koppelübertragungsringes aufliegende fiktive Ebene in einem Winkel zwischen 85° und 60° zu der Rotationsachse des Koppelübertragungsringes, insbesondere zu einer Rotationsachse einer Welle, an der der Koppelübertragungsring angeordnet ist, ausgerichtet ist.

In einer weiteren Ausgestaltung ist der Aktuator ein Elektromotor, vorzugsweise mit einem Getriebe, oder ein Piezoelement.

Vorzugsweise weist die kraftfahrzeugklimaanlage wenigstens einen Luftkanal zum Durchleiten von Luft auf.

In einer ergänzenden Ausgestaltung weist die Kraftfahrzeugklimaanlage wenigstens eine Luftleiteiteinrichtung, z, B. wenigstens eine Luftklappe und/oder wenigstens einen Schirm und/oder wenigstens ein Rollband, auf, mittels der oder denen die durch den wenigstens einen Kanal leitbare Luftmenge steuerbar ist.

Insbesondere besteht das Gehäuse der Kraftfahrzeugklimaanlage wenigstens teilweise aus Kunststoff.

Zweckmäßig ist der wenigstens eine Kanal zum Durchleiten von Luft von einer Wandung des Gehäuses begrenzt.

ln einer weiteren Ausgestaltung weist der Aktuator eine Positoinsermittlungseinrichtung zur Erfassung der Lage der Welle auf,

insbesondere ist die Positionsermittlungseinheit mit einer Steuerungseinheit für die Kraftfahrzeugklimaanlage verbunden und mittels der von der Positionsermittlungseinheit erfassten Daten der Aktuator steuerbar zur Erzielung einer bestimmten Lage der Welle und/oder des Stellorganes.

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage mit einem Stellorgan,
- Fig. 2: einen Ansicht einer welle mit einem Übertragungsring als kinematikelement und
- Fig, 3: eine weitere Ansicht der Welle gemäß Fig. 2, die mit einem anderen Kinematikelement in Eingriff steht.

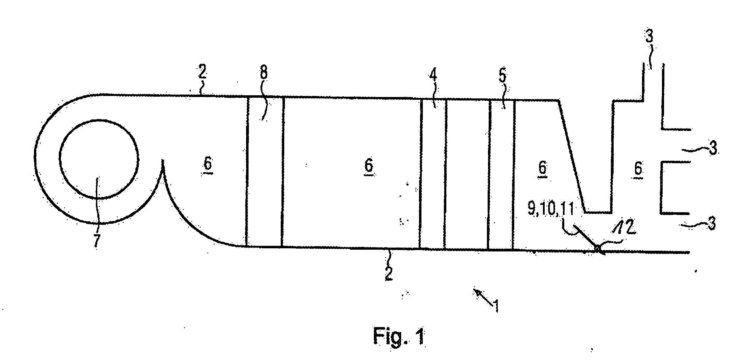

Fig. 1 zeigt eine Kraftfahrzeugklimaanlage 1 zum Kühlen und/oder zum Erwärmen von Luft, welche einem Fahrzeuginnenraum eines Kraftfahrzeuges zugeführt wird. Die Kraftfahrzeugklimaanlage 1 weist ein Gehäuse 2 aus Kunststoff auf, das Luftkanäle 6 der Kraftfahrzeugklimaanlage 1 zum Durchleiten von Luft begrenzt. Die Luft wird von einem Gebläse 7 angesaugt, durch den bzw. die Luftkanäle 6 geleitet und anschließend durch Austritts-.. Öffnungen 3 in den Fahrzeuginnenraum des Kraftfahrzeuges eingeleitet. In dem Luftkanal 6 ist ein Luftfilter 8, ein Kältemittelverdampfer 4 zum Kühlen der Luft und ein Wärmeübertrager 5 zum erwärmen der Luft angeordnet. Der Warmeübertrager 5 kann entweder als elektrische Heizeinrichtung ausgebildet sein oder dahingehend, dass durch den Wärmeübertrager 5 Kühiflüssigkeit eines Verbrennungsmotors des Kraftfahrzeuges (nicht dargestellt) durchgeleitet wird, so dass das warme Kühlmittel die durch den Luftkanal 6 geleitete Luft erwärmt Eine in dem Luftkanal 6 als Luftklappe 11 ausgebildete Luftleiteinrichtung 10 dient dazu, die Menge an Luft, welche durch die Austrittsöffnungen 3 austritt, zu steuern. Hierzu kann die Luftklappe 11 als Stellorgan 9 um eine Schwenkachse 12 verschwenkt werden.

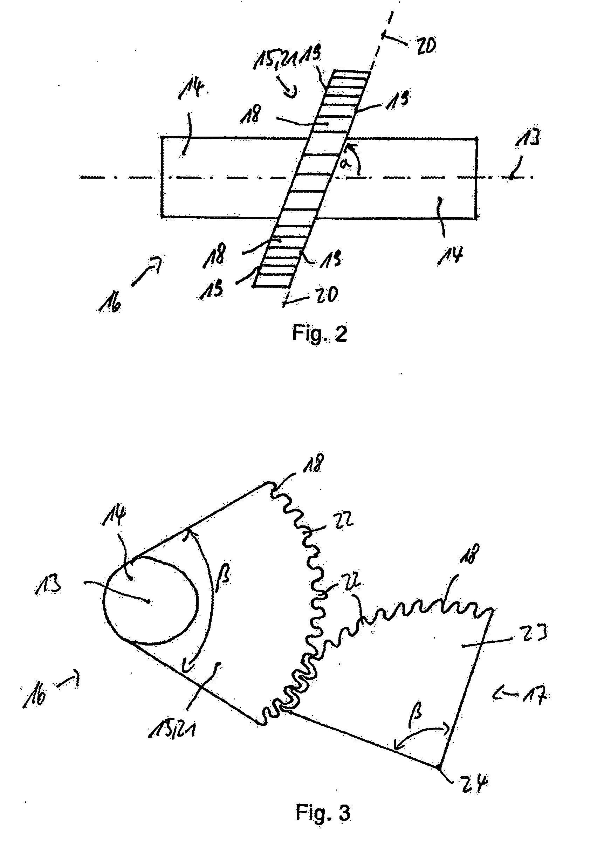

Zum Bewegen der Luftklappe 11 ist von einem nicht dargestellten Aktuator, der als Elektromotor mit einem Getriebe (nicht dargestellt) ausgebildet ist, mittels Kinematikelementen 16, 17 von dem Elektromotor bzw. dessen Getriebe auf die Luftklappe 11 eine Kraft zu übertragen. Das Kinematikelement 16, 17 ist in Fig. 2 und 3 dargestellt Dabei ist das Kinematikelement 16 eine Welle 14 mit einem Übertragungsring 15. Der Übertragungsring 15 ist dabei lediglich als Ringsegment 21 mit einem Segmentwinkel β ausgebildet (Fig. 3). Die Welle 14 ist dabei rotierbar um eine Rotationsachse 13 an dem Gehäuse 2 der Kraftfahrzeugklimaanlage 1 gelagert. Der Übertragungsring 15, der eine radiale Fortsetzung der Welle 14 darstellt, weist dabei an seinem radialen Ende eine Flanke 18 auf, An der Flanke 18 sind dabei Zähne 22 ausgebildet Bezüglich einer Richtung parallel zu der Rotationsachse 13 weist die Flanke 18 zwei axiale Enden 19 auf. Auf diese axialen Enden 19 der Flanke 18 wird eine fiktive Ebene 20 (Fig. 2) aufgelegt Die fiktive Ebene 20 ist dabei in einem Winkel α zu der Rotationsachse 13 ausgerichtet. Der Winkel α ist dabei ein spitzer Winkel und beträgt beispielsweise 80°. Die Flanke 18 des Übertragungsringes 15 steht dabei in Eingriff mit Zähnen 22 eines anderen Kinematikelementes 17, Das andere Kinematikelement 17 weist dabei einen Koppelübertragungsring 23 auf, der rotierend zu einer Rotationsachse 24 des Koppelübertragungsringes 23 gelagert ist. Bei einem Bewegen oder Rotieren der Welle 14 um die Rotationsachse 13 bewegt sich auch das Ringsegment 21 mit, d. h, führt ebenfalls eine Rotationsbewegung um die Rotationsachse 13 aus, weil das Ringsegment 21 und die Welle 14 ein Bauteil darstellen, Vorzugsweise sind dabei das Ringsegment 21 und die Welle 14 einteilig aus Kunststoff mittels Spritzgießen hergestellt, Aufgrund des lneinandergreifens der Zähne 22 des Ringsegmentes 21 mit den Zähnen 22 des Koppelübertragungsringes 23 kann bei einer Rotationsbewegung der Welle 14 um die Rotationsachse 13 ein Drehmoment formschlüssig mit der Zähne 22 von dem Kinematikelement 16 auf das andere Kinematikelement 17 übertragen werden.

Aufgrund der Neigung des Übertragungsringes 15 bezüglich der Rotationsachse 13 benötigt das Kinematikelement 16 an der Welle 14 im Bereich des Übertragungsringes 15 teilweise keinen Bauraum an speziellen Stehen bzw. Räumen, der jedoch bei einer senkrechten Anordnung wie im Stand der Technik von dem Übertragungsring 15 bzw. der Rotationsachse 13 an den speziellen Stellen benötigt werden würde.

ln einem weiteren, nicht dargestellten Ausführungsbeispiel ist das andere Kinematikelement 17 identisch zu dem Kinematikelement 16 gemäß Fig. 2 und 3 ausgebildet. Somit greifen die beiden Übertragungsringe 15 sowohl des Kinermatikelementes 16 als auch das anderen Kinematikelementes 17 an den Zähnen 22 ineinander. Der Übertragungsring 15 des anderen Kinematikelementes 17 stellt auch in diesem Ausführungsbeispiel den Koppelübertragungsring 23 dar. Damit wird in vorteilhafter Weise auch an dem anderen Kinematikelement 17 keinen Bauraum senkrecht zur Rotationsachse 13 im Bereich des Übertragungsringes 15 bzw, des Koppelübertragungsringes 23 in den spezieller Stellen oder Räumen benötigt.

Insgesamt betrachtet sind mit der eifindungsgemäßen Kraftfahrzeugklimaanlage 1 wesentliche Vorteile verbunden, Der an der Welle 14 angeordnete Übertragungsring 15 ist bezüglich der Rotationsachse 13 der Welle 14 geneigt. Dadurch kann von dem Übertragungsring 15 senkrecht zu der Rotationsachse 13 spezieller Bauraum freigehalten werden. Bei beengten oder besonderen Bauraumverhältnissen an dem Kinermatikelement 16 oder dem anderen Kinematikelement 17 kann damit bei dieser Ausbildung des Übertragungsringes 15 weiterhin die Übertragung von Drehmomenten auch unter eingeengten. Bauraunverhälttnissen ausgeführt werden.

### Bezugszeichenliste

- 1: Kraftfahrzeugklimaanlage
- 2: Gehäuse
- 3: Austrittsöffnung
- 4: Kältemittelverdampfer
- 5: Wärmeübertrager
- 6: Luftkanal
- 7: Gebläse
- 8: Luftfilter
- 9: Stellorgan
- 10: Luftleiteinrichtung
- 11: Luftklappe
- 12: Schwenkachse der Luftklappe
- 13: Rotationsachse der Welle
- 14: Welle
- 15: Übertragungsring
- 16: Kinematikelement
- 17: anders Kinematikelement
- 18: Flanke des Übertragungsringes
- 19: Axiale Ende der Flanke
- 20: Ebene an axialen Ende
- 21: Ringsegment
- 22: Zähne
- 23: Koppeiübertragungsring
- 24: Rotationsachse des Koppelübertragungsringes

- α: Winkel zwischen Ebene an axialen Ende und Rotationsachse
- β: Segmentwinkel

## Patentansprüche

1. Kraftfahrzeugklimaanlage (1), umfassend
- ein Gehäuse (2),
- wenigstens ein Stellorgan (9), z. B. eine Luftleiteinrichtung (9) oder ein Ventil,
- einen Äktuator,
- wenigstens zwei um je eine Rotationsachse (13) rotierbare Wellen (14), die ein Kinematikelement (16) mit einem wenigstens teilweise ausgebildeten Übertragungsring (15) zur Übertragung von Drehmomenten an einer Flanke (18) des Übertragungsringes (15) auf ein zweites Kinematikelement (17) und die Flanke (18) ein axiales Ende (19) aufweisen,
- wobei das wenigstens eine Stellorgan (9) mittels der Kihematikelemente (16, 17) in mechanischer Wirkverbindung steht mit dem Aktuator zum Bewegen des wenigstens einen Stellorganes (9),
**dadurch gekennzeichnet, dass**
eine an dem axiale Ende (19) der Flanke (18) aufliegende fiktive Ebene (20) in einem Winkel zwischen 85° und 60° zu der Rotationsachse (13) ausgerichtet ist.

2. Kraftfahrzeugklimaanlage nach Anspruch 1, **dadurch gekennzeichnet, dass** die fiktive Ebene (20) in einem Winkel zwischen 85° und 70° zu der Rotationsachse (13) ausgerichtet ist.

3. Kraftfahrzeugklimaanlage nach einem oder mehreren der vorhergehenden Ansprüche, **dadurch gekennzeichnet, dass** der Übertragungsring (15) als ein Ringsegment (21) ausgebildet ist.

4. Kraftfahrzeugklimaanlage nach Anspruch 3, **dadurch gekennzeichnet, dass** das Ringsegment (21) einen Segmentwinkel zwischen 30° und 180°, insbesondere zwischen 30° und 100°, aufweist.

5. Kraftfahrzeugklimaanlage nach einem oder mehreren der vorhergehenden Anspruche, **dadurch gekennzeichnet, dass** der Übertragungsring (15) form- und/oder kraftschlüssig in mechanischer Wirkverbindung steht mit dem anderen Kinematikelement (17).

6. Kraftfahrzeugklimaanlage nach einem oder mehreren der vorhergehenden Ansprüche, **dadurch gekennzeichnet, dass** die Flanke (18) des Übertragungsringes (15) mit Zähnen (22) versehen ist.

7. Kraftfahrzeugklimaanlage nach Anspruch 6, **dadurch gekennzeichnet, dass** das zweite Kinematikelement (17) mit Zähnen (22) versehen ist und in die Zähne (22) des Übertragungsringes (15) eingreift.

8. Kraftfahrzeugklimaanlage nach einem oder mehreren der vorhergehenden Anspruch, **dadurch gekennzeichnet, dass** das zweite Kinematikelement (17) als eine um eine Rotationsachse (24) rotierbare Welle mit einem wenigstens teilweise ausgebildeten Koppelübertragungsring (23) ausgebildet ist.

9. Krafffahrzeugklimaanlage nach Anspruch 8, **dadurch gekennzeichnet, dass** der Koppelübertragungsring (23) identisch zu dem Übertragungsring (15) ausgebildet ist.

## Claims

1. A motor vehicle air conditioning system (1), comprising
- a housing (2);
- at least one control member (9), for example an air guide device (9) or a valve,
- an actuator,
- at least two shafts (14), which can be rotated about a respective rotational axis (13) and which comprise a kinematic element (16) having an at least regionally formed transmission ring (15) for transmitting torque on a flank (18) of the transmission ring (15) to a second kinematic element (17), and the flank (18) having an axial end (19);
- the at least one control member (9) being mechanically operatively connected to the actuator by means of the kinematic elements (16, 17) for moving the at least one control member (9),
**characterized in that**
a fictitious plane (20) seated on the axial end (19) of the flank (18) is oriented at an angle between 85° and 60° relative to the rotational axis (13).

2. The motor vehicle air conditioning system according to claim 1, **characterized in that** the fictitious plane (20) is oriented at an angle between 85° and 70° relative to the rotational axis (13)

3. A motor vehicle air conditioning system according to one or more of the preceding claims, **characterized in that** the transmission ring (15) is designed as a ring segment (21).

4. The motor vehicle air conditioning system according to claim 3, **characterized in that** the ring segment (21) has a segment angle between 30° and 180°, and more particularly between 30° and 100°.

5. A motor vehicle air conditioning system according to one or more of the preceding claims, **characterized in that** the transmission ring (15) is mechanically operatively connected to the other kinematic element (17) positively and/or non-positively.

6. A motor vehicle air conditioning system according to one or more of the preceding claims, **characterized in that** the flank (18) of the transmission ring (15) is provided with teeth (22).

7. The motor vehicle air conditioning system according to claim 6, **characterized in that** the second kinematic element (17) is provided with teeth (22) and engages with the teeth (22) of the transmission element (15).

8. A motor vehicle air conditioning system according to one or more of the preceding claims, **characterized in that** the second kinematic element (17) is designed as a shaft which can rotate about a rotational axis (24) and comprises an at least regionally formed coupling transmission ring (23).

9. The motor vehicle air conditioning system according to claim 8, **characterized in that** the coupling transmission ring (23) is designed identically to the transmission ring (15).

## Revendications

1. Système de climatisation (1) d'un véhicule automobile, comprenant :
- un carter (2),
- au moins un organe de réglage (9), par exemple un dispositif déflecteur d'air (9) ou une soupape,
- un actionneur,
- au moins deux arbres (14) pouvant tourner chacun autour d'un axe de rotation (13), arbres qui présentent un élément de cinématique (16) comportant une bague de transmission (15) configurée au moins partiellement, servant à la transmission, à un deuxième élément de cinématique (17), de couples se produisant sur un flanc (18) de la bague de transmission (15), le flanc (18) présentant une extrémité axiale (19),
- où l'organe de réglage (9) au moins au nombre de un est en liaison mécanique active, au moyen des éléments de cinématique (16, 17), avec l'actionneur servant à déplacer l'organe de réglage (9) au moins au nombre de un,
**caractérisé en ce que** le plan fictif (20) s'appliquant au niveau de l'extrémité axiale (19) du flanc (18) est orienté suivant un angle compris entre 85° et 60° par rapport à l'axe de rotation (13).

2. Système de climatisation d'un véhicule automobile selon la revendication 1, **caractérisé en ce que** le plan fictif (20) est orienté suivant un angle compris entre 85° et 70° par rapport à l'axe de rotation (13).

3. Système de climatisation d'un véhicule automobile selon l'une quelconque ou plusieurs des revendications précédentes, **caractérisé en ce que** la bague de transmission (15) est configurée comme un segment annulaire (21).

4. Système de climatisation d'un véhicule automobile selon la revendication 3, **caractérisé en ce que** le segment annulaire (21) présente un angle de segment compris entre 30° et 180°, en particulier entre 30° et 100°.

5. Système de climatisation d'un véhicule automobile selon l'une quelconque ou plusieurs des revendications précédentes, **caractérisé en ce que** la bague de transmission (15) est en liaison mécanique active, par complémentarité de forme et/ou par action de force, avec l'autre élément de cinématique (17).

6. Système de climatisation d'un véhicule automobile selon l'une quelconque ou plusieurs des revendications précédentes, **caractérisé en ce que** le flanc (18) de la bague de transmission (15) est doté de dents (22).

7. Système de climatisation d'un véhicule automobile selon la revendication 6, **caractérisé en ce que** le deuxième élément de cinématique (17) est doté de dents (22) et s'engrène dans les dents (22) de la bague de transmission (15).

8. Système de climatisation d'un véhicule automobile selon l'une quelconque ou plusieurs des revendications précédentes, **caractérisé en ce que** le deuxième élément de cinématique (17) est configuré comme un arbre pouvant tourner autour d'un axe de rotation (24) et comportant une bague de transmission de couple (23) configurée au moins partiellement.

9. Système de climatisation d'un véhicule automobile selon la revendication 8, **caractérisé en ce que** la bague de transmission de couple (23) est configurée en étant identique à la bague de transmission (15).
